# EUROPEAN PATENT SPECIFICATION

(11) **EP 1 915 052 B1**
(45) Date of publication and mention of the grant of the patent: **06.05.2009**
(21) Application number: 06779127.7
(22) Date of filing: 15.08.2006
(51) Int. Cl.: A01K 77/00

(54) **FISHING NET HOLDER**
FISCHNETZHALTER
SUPPORT POUR FILET DE PÊCHE

(30) Priority: 18.08.2005 GB 0516949
(43) Date of publication of application: 30.04.2008
(73) Proprietor: Hardy & Greys Ltd, Alnwick Northumberland NE66 2PF (GB)
(72) Inventor: NORRIS, Charles, Northumberland NE66 2PF (GB)
(74) Representative: Vinsome, Rex Martin
(86) International application number: PCT/GB2006/003051
(87) International publication number: WO 2007/020434

(56) References cited:
- GB-A- 2 279 219
- GB-A- 2 405 777
- US-A- 5 339 556

## Description

The present invention relates to a holder for a fishing net.

Known fishing net arrangements comprise two poles or rods, with netting extending between the distal ends of the poles or rods. The proximal ends of the poles or rods may be inserted into a holder, which includes two tubular connectors for receiving the poles or rods.

GB 2405777A discloses a spreading holder for a collapsible fishing net, including two connectors which are arranged to engage respective ends of first and second arms of a fishing net. The spreading holder includes a releasable locking means which is arranged to lock the connectors in the spread position, but allow unlocking of the connectors in order to move the connectors to the retracted position when required. The releasable locking means includes a movable lever. When lifted, the lever allows one connector to rotate relative to the other, and when lowered, the lever locks the connectors in position. GB 2 279 219 A discloses a fishing net holder including two connectors which are arranged to engage respective ends of first and second arms, and further including a releasable locking means.

The arrangement described above has a number of disadvantages. For example, the holder is cumbersome, and difficult to operate by a user. In particular, a user must lift the lever in order to open the holder, lower the lever in order to lock the holder in place, and then lift the lever again in order to close the holder once more. Moreover, the holder is difficult to operate single-handedly.

The present invention seeks to overcome or at least alleviate the above-mentioned disadvantages of the prior art.

In accordance with the present invention, there is provided a fishing net holder comprising: -
(i) a body;
(ii) a first arm mounted to the body and adapted to be mounted to a first pole or rod of a fishing net;
(iii) a second arm mounted to the body and adapted to be mounted to a second pole or rod of a fishing net, wherein the second arm is pivotable relative to the first arm;
(iv) a releasable ratchet for allowing the angle between the first and second arms to increase and preventing the angle between the first and second arms from decreasing; and
(v) release means for releasing the ratchet to allow the angle between the first and second arms to be decreased.

This provides the advantage that the holder may be quickly and easily operated by a user, and may be opened simply by manoeuvring the arms to their open position, wherein they are held in the open position and prevented from accidentally closing by means of the ratchet. In the event that the user wishes to close the holder, they simply actuate the release means which releases the ratchet to allow the arms to come together. The invention also has a number of further advantages, in that the holder may be conveniently opened either single-handedly or using both hands, without a need to release one of the arms first, that cumbersome locking elements and levers are not required, and the holder automatically stays in its open position until such times as the release means is briefly actuated, and that the holder contains relatively few moving parts and is compact in nature.

Preferably, the first arm is non-pivotally mounted to the body, and the second arm is pivotally mounted to the body.

This provides the advantage that the holder is easier to operate than if both the first and second arms were pivotably mounted to the body, since it includes fewer moving parts and is therefore more easily handled by a user.

The holder may be adapted to maintain the first and second arms in a plurality of predetermined orientations relative to each other.

The holder may be adapted to maintain the first and second arms in said predetermined orientations by means of a plurality of rebates inside of which a captive ball is locatable.

This provides the advantage that fishing nets of various sizes may be conveniently used with the holder of the invention.

Preferably, the body is provided with a plurality of rebates inside of which a captive ball is locatable, to provide an audible click corresponding to predetermined orientations of the first and second arms relative to each other.

Preferably, the body is of substantially circular cross-section and the ratchet includes a substantially part-cylindrical rack arranged substantially coaxially with the body.

This provides the advantage of enabling the holder to be of compact construction.

Preferably, a pawl is mounted on the body, and is adapted to engage a tooth of the rack.

The pawl may be radially slidable on the body between a locking and an unlocking condition.

This provides the advantage that the fishing net holder is compact and does not accidentally slip between its open and closed conditions.

The release means may comprise a release button adapted to move the pawl between its locking and unlocking conditions.

This provides the advantage that a user may single-handedly operate the holder without having to use cumbersome unlocking elements and levers.

A preferred embodiment of the present invention will now be described, by way of example only and not in any limitative sense, with reference to the accompanying drawings in which: -
Figure 1 shows a fishing net holder with the arms closed, in accordance with the present invention;

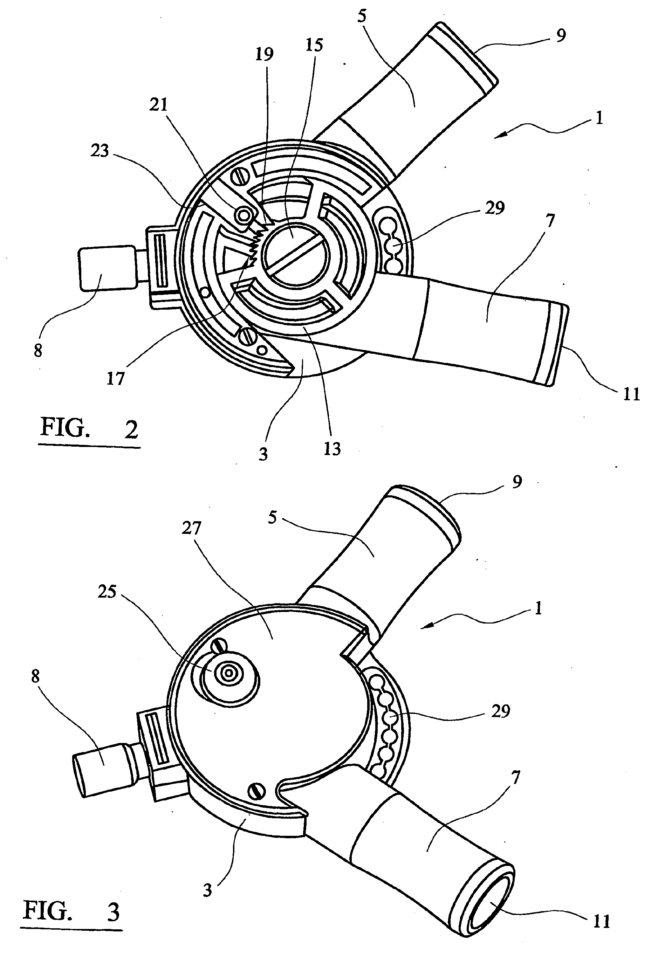

Figure 2 shows a fishing net holder with the arms open and showing hidden detail, in accordance with the present invention; and
Figure 3 shows a fishing net holder with the arms open, in accordance with the present invention.

A fishing net holder 1 comprises a body 3 having a substantially circular cross-section, a first arm 5 fixed to the body 3, and a second arm 7 pivotally mounted to the body 3. The holder 1 further comprises a threaded projection 8 which is adapted to be engaged with a corresponding threaded bore in a handle (not shown).

The first arm 5 has a first connector in the form of a first cylindrical socket 9, to receive a first pole or arm of a conventional net (not shown). The second arm 7 has a second connector in the form of a second cylindrical socket 11, to receive a second pole or arm of a convnetional net (not shown). The second arm 7 is integral with a cylindrical member 13, which is secured axially to a pivot (not shown) on the body 3 by means of a screw 15.

The holder 1 further comprises a ratchet comprising a cylindrical rack 17 having a plurality of teeth 19, The cylindrical rack 17 is integral with the cylindrical member 13 and is coaxial with the circular cross-section of the body. 3. A moving pawl 21 is radially movable within a radial guideway 23. The pawl 21 is urged radially inwardly by means of a spring (not shown).

The teeth 19 and pawl 21 are inclined relative to each other so that even when the pawl 21 is engaged between the teeth 19, the second arm 7 can be pivotted by a user so as to facilitate an increase in the angle between the first 5 and second 7 arms to open the arms 5 and 7. However, the teeth 19 and pawl 21 are also inclined relative to each other so that when the pawl 21 is engaged between the teeth 19 (i.e. when the pawl 21 is in its radially inward position), the second arm 7 cannot be pivotted by a user so as to facilitate a decrease in the angle between the first 5 and second 7 arms to close the arms 5 and 7.

Six rebates 29 are arranged around the periphery of the body 3. The rebates 29 co-operate with a captive ball and spring arrangement (not shown) in order to provide an audible click corresponding to six positions of engagement of the pawl 21 with the teeth 19 of the cylindrical rack 17.

A cover 27 which the internal parts of the holder 1. A release means in the form of a release button 25 is provided on the exterior of the cover 27. The release button 25 is locatable with the pawl 21 so that when the release button 25 is depressed, the pawl 21 moves radially outward in the guideway 23 so that it no longer engages the teeth 19 of the rack 17, thereby releasing the ratchet to allow a user to decrease the angle between the first 5 and second 7 arms to close the arms 5 and 7.

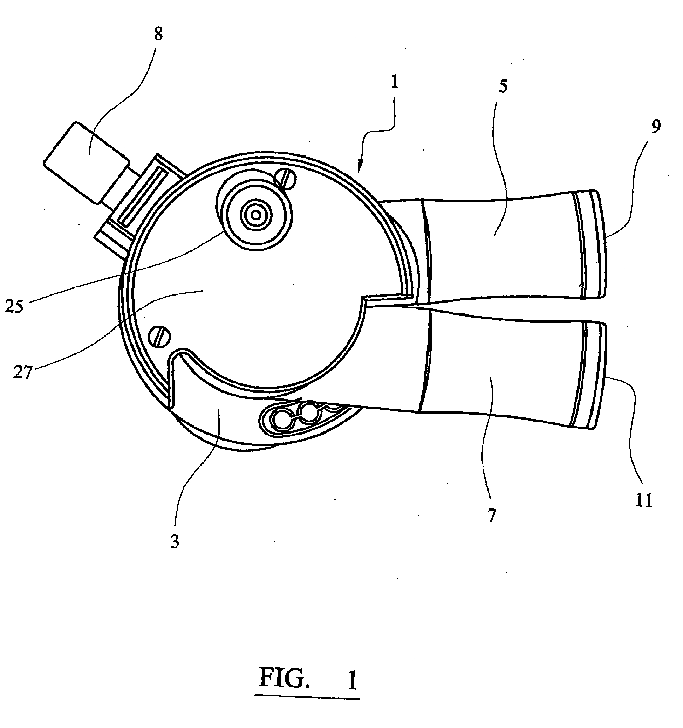

Starting from the configuration shown in Figure 1, which shows the holder 1 in its closed position, when a user wishes to open the arms 5 and 7, he/she simply urges the arms 5 and 7 apart, and chooses how far to open the holder according to the various positions determined by the six rebates 29. During the opening of the holder 1 in this way, the spring (not shown) urges the pawl 21 into engagement with the teeth 19, and in this way, only movement which increases the angle between the arms 5 and 7 is facilitated.

The holder remains in this open position due to the engagement of the pawl 21 with the teeth 19, until such times as the user wishes to close the holder 1, whereupon they simply depress the release button 25. In depressing the release button 25, the pawl 21 is moved radially outwardly in the guideway 23, against the action of the spring (not shown) so that the pawl 21 no longer engages the teeth 19. In this configuration, the user may bring the arms 5 and 7 together to decrease the angle between the arms 5 and 7 and thereby close the holder 1.

It will be appreciated by persons skilled in the art that the above embodiment has been described by way of example only, and not in any limitative sense, and that various alterations and modifications are possible without departing from the scope of the invention as defined by the appended claims.

## Claims

1. A fishing net holder (1) comprising: -
(i) a body (3);
(ii) a first arm (5) mounted to the body (3) and adapted to be mounted to a first pole or rod of a fishing net;
(iii) a second arm (7), mounted to the body and adapted to be mounted to a second pole or rod of a fishing net, wherein the second arm is pivotable relative to the first arm (5);
(iv) a releasable ratchet (19, 21) allowing the angle between the first and second arms to increase and preventing the angle between the first and second arms from decreasing; and
(v) release means (25) for releasing the ratchet to allow the angle between the first and second arms (5, 7) to be decreased.

2. A fishing net holder as claimed in claim 1, wherein the first arm (5) is non-pivotally mounted to the body, and the second arm (7) is pivotally mounted to the body.

3. A fishing net holder as claimed in claim 1 or 2, wherein the holder is adapted to maintain the first and second arms (5, 7), in a plurality of predetermined orientations relative to each other.

4. A fishing net holder as claimed in claim 3, wherein the holder is adapted to maintain the first and second arms (5, 7) in said predetermined orientations by means of a plurality of rebates (29) inside of which a captive ball is locatable.

5. A fishing net holder as claimed in any one of the preceding claims, wherein the body is of substantially circular cross-section and the ratchet includes a substantially part-cylindrical rack (17) arranged substantially coaxially with the body.

6. A fishing net holder as claimed in claim 5, wherein a pawl (21) is mounted on the body, and is adapted to engage a tooth (19) of the rack.

7. A fishing net holder as claimed in claim 6, wherein the pawl (21) is radially slidable on the body between a locking and an unlocking condition.

8. A fishing net holder as claimed in any one of claims 6 or 7, wherein the release means comprises a release button (25) adapted to move the pawl between its locking and unlocking conditions.

## Patentansprüche

1. Haltervorrichtung (1) für Fischnetze, umfassend:
(i) einen Grundkörper (3);
(ii) einen am Grundkörper (3) montierten ersten Arm (5), der mit einem ersten Stab oder einer ersten Stange eines Fischnetzes verbindbar ist;
(iii) einem am Grundkörper montierten zweiten Arm (7), der mit einem zweiten Stab oder einer zweiten Stange eines Fischnetzes verbindbar ist, wobei der zweite Arm gegenüber dem ersten Arm (5) verschwenkbar ist;
(iv) eine lösbare Ratsche (19, 21), um ein Vergrößern des Winkels zwischen dem ersten und zweiten Arm zu ermöglichen und ein Verringern des Winkels zwischen dem ersten und zweiten Arm zu verhindern;
(v) Entsperrmittel (25) zum Entsperren der Ratsche, um ein Verringern des Winkels zwischen dem ersten und zweiten Arm (5, 7) zu ermöglichen.

2. Haltervorrichtung für Fischnetze nach Anspruch 1, bei der der erste Arm (5) nichtschwenkbar am Grundkörper angeordnet ist und der zweite Arm (7) schwenkbar am Grundkörper angeordnet ist.

3. Haltervorrichtung für Fischnetze nach Anspruch 1 oder 2, bei der die Haltervorrichtung derart ausgebildet ist, dass der erste und zweite Arm (5, 7) in einer Mehrzahl von vorbestimmten Orientierungen zueinander gehalten werden.

4. Haltervorrichtung für Fischnetze nach Anspruch 3, bei der die Haltervorrichtung den ersten und zweiten Arm (5, 7) durch eine Mehrzahl von Vertiefungen (29) zur Aufnahme einer Sperrkugel in den vorbestimmten Orientierungen zueinander hält.

5. Haltervorrichtung für Fischnetze nach einem der vorangehenden Ansprüche, bei der der Grundkörper einen im Wesentlichen kreisförmigen Querschnitt aufweist und die Ratsche eine im Wesentlichen teilzylindrische Zahnwalze (17) aufweist, die im Wesentlichen koaxial zum Grundkörper angeordnet ist.

6. Haltervorrichtung für Fischnetze nach Anspruch 5, bei der eine Sperrklinke (21) an dem Grundkörper angeordnet ist, die mit einem Zahn (19) der Zahnwalze in Eingriff bringbar ist.

7. Haltervorrichtung für Fischnetze nach Anspruch 6, bei der die Sperrklinke (21) zwischen einer Sperrstellung und einer Entsperrstellung radial verschiebbar am Grundkörper angeordnet ist.

8. Haltervorrichtung für Fischnetze nach einem der Ansprüche 6 oder 7, bei der das Entsperrmittel einen Entsperrknopf (25) aufweist, mittels dem die Sperrklinke zwischen ihrer Sperrstellung und Entsperrstellung bewegbar ist.

## Revendications

1. Support pour filet de pêche (1) comprenant :
(I) un corps (3)
(II) un premier bras (5) monté sur le corps (3) et conçu pour être monté sur une première perche ou sur la première canne d'un filet de pêche,
(III) un second bras (7) monté sur le corps et conçu pour être monté sur une seconde perche ou sur la seconde canne d'un filet de pêche, dans lequel le second bras peut pivoter par rapport au premier bras (5),
(IV) un cliquet libérable (19, 21) destiné à permettre l'augmentation de l'angle entre les premier et second bras et empêcher toute diminution de l'angle entre les premier et second bras, et
(V) un moyen de libération (25) destiné à libérer le cliquet afin de permettre la diminution de l'angle entre les premier et second bras (5, 7).

2. Support pour filet de pêche selon la revendication 1, dans lequel le premier bras (5) est monté sans possibilité de pivotement sur le corps et le second bras (7) est monté sur le corps.

3. Support pour filet de pêche selon la revendication 1 ou 2, dans lequel le support est conçu pour maintenir les premier et second bras (5, 7) dans une pluralité d'orientations prédéterminées l'un par rapport à l'autre.

4. Support pour filet de pêche selon la revendication 3, dans lequel le support est conçu pour maintenir les premier et second bras (5, 7) dans lesdites orientations prédéterminées au moyen d'une pluralité de feuillures (29) à l'intérieur desquelles peut être placée une bille captive.

5. Support pour filet de pêche selon l'une quelconque des revendications précédentes, dans lequel le corps est constitué d'une section transversale sensiblement circulaire et le cliquet inclut une crémaillère (17) en partie sensiblement cylindrique disposé sensiblement coaxialement avec le corps.

6. Support pour filet de pêche selon la revendication 5, dans lequel un linguet (21) est monté sur le corps, et il est conçu pour se mettre en prise avec une dent (19) de la crémaillère.

7. Support pour filet de pêche selon la revendication 6, dans lequel le linguet (21) peut glisser radialement sur le corps entre un état de verrouillage et un état de déverrouillage.

8. Support pour filet de pêche selon l'une quelconque des revendications 6 ou 7, dans lequel le moyen de libération comprend un bouton de libération (25) conçu pour déplacer le linguet entre son état de verrouillage et son état de déverrouillage.
